# EUROPÄISCHE PATENTSCHRIFT

(11) **EP 3 751 648 B1**
(45) Veröffentlichungstag und Bekanntmachung des Hinweises auf die Patenterteilung: **17.09.2025**
(21) Anmeldenummer: 20178289.3
(22) Anmeldetag: 04.06.2020
(51) Int. Cl.: H01M 6/32, H01M 6/38, F16F 1/32

(54) **AKTIVIERUNGSMECHANISMUS FÜR EINE BATTERIE FÜR EINEN ELEKTRONISCHEN ZÜNDMECHANISMUS**
ACTIVATION MECHANISM FOR A BATTERY FOR AN ELECTRONIC IGNITION MECHANISM
MÉCANISME D'ACTIVATION POUR UNE BATTERIE POUR UN MÉCANISME D'ALLUMAGE ÉLECTRONIQUE

(30) Priorität: 12.06.2019 DE 102019004140
(43) Veröffentlichungstag der Anmeldung: 16.12.2020
(73) Patentinhaber: Diehl & Eagle Picher GmbH, 90552 Röthenbach (DE)
(72) Erfinder: HEIN, Roland, 90453 Nürnberg (DE)
(74) Vertreter: Diehl Patentabteilung

(56) Entgegenhaltungen:
- EP-A1- 3 382 782
- JP-U- S57 135 074
- US-A- 2 918 516

## Beschreibung

Die Erfindung betrifft eine Aktivierungseinrichtung für eine Batterie für einen elektronischen Zündmechanismus, umfassend eine mit einem Elektrolyten gefüllte Ampulle sowie eine Einrichtung zum Zerbrechen der Ampulle.

Eine solche Aktivierungseinrichtung dient zum Aktivieren einer Batterie für einen elektronischen Zündmechanismus eines Geschosses, das über ein Waffenrohr verschießbar ist. Mit dem Verschießen wird die Aktivierungseinrichtung betätigt, so dass die Ampulle aufgebrochen wird und der Elektrolyt die benachbarten Batteriezellen galvanisch aktiviert.

Ein solcher Aktivierungsmechanismus ist beispielsweise aus EP 1 467 423 A2 bekannt. Dieser Aktivierungsmechanismus wird erst bei sehr hohen Beschleunigungen größer dem 3.000-fachen der Erdbeschleunigung betätigt, je nach Auslegung kann der Aktivierungsmechanismus auch bis zu dem 5.000-fachen der Erdbeschleunigung standhalten. Der aus EP 1 467 423 A2 bekannte Aktivierungsmechanismus sieht in einer ersten Realisierungsvariante vor, die Ampulle, die den Elektrolyten enthält, auf einem vorzugsweisen ringförmigen Lagerelement aufzulagern, das über wenige schmale Verbindungsstege mit einem Träger verbunden ist, der im Inneren des ringförmigen Lagerelements angeordnet ist, mithin also unterhalb der Ampulle positioniert ist. Wird nun das Geschoss verschossen, so wirkt beschleunigungsbedingt eine hohe Kraft auf die Ampulle und über diese auf das Lagerelement, was dazu führt, dass die Verbindungsstege abgeschert werden und die Ampulle quasi freigegeben wird, so dass sie gegen den Träger schlägt, was zum Brechen der Ampulle und damit zur Aktivierung der Batterie führt. Um diese Aktivierung zu erwirken, ist eine "Auslöseschwelle" zu überschreiten, mithin eine hinreichende Krafteinwirkung durch die Abschlussbeschleunigung zu erzielen, damit die Verbindungsstege abgeschert werden und es zum Aufbrechen der Ampulle kommt.

Eine zweite aus EP 1 467 423 A2 bekannte Realisierungsvariante sieht vor, die Ampulle mit einem Auslösesystem zu verkleben, so dass die Ampulle quasi freihängend im Gehäuse aufgenommen ist. Das Auslösesystem umfasst eine Hängevorrichtung, an der die Ampulle angeklebt ist, wobei diese Hängevorrichtung an einem entsprechenden Träger im Gehäuse aufgenommen ist. Zum Aktivieren bei hinreichend hoher Beschleunigung kann entweder die Klebeverbindung der Ampulle zu der Hängeeinrichtung gelöst werden, so dass die Ampulle abfällt und gegen ein sie brechendes Element schlägt. Alternativ kann auch die Hängeeinrichtung aus ihrer Aufhängung im Gehäuse gelöst werden, worüber die Ampulle ebenfalls freigegeben werden kann.

Während bei der erstgenannten Ausführungsform aufgrund der Zwischenschaltung des ringförmigen Lagerelements nur ein relativ geringer Abstand zu dem das Zerbrechen erwirkenden Träger gegeben ist, was sich nachteilig auf den Aufbrechvorgang auswirken kann, ist die zweitgenannte Realisierungsvariante in der Herstellung sehr aufwendig.

Eine weitere Ausführungsform einer solchen Aktivierungseinrichtung ist aus DE 100 38 066 A1 bekannt. Diese ist insbesondere für niedrigere Aktivierungsbeschleunigungen vorgesehen, das heißt, dass die Auslöseschwelle bei etwa dem 1.000 - 2.000-fachen der Erdbeschleunigung liegt. Aufgrund der niedrigen Auslöseschwelle ist es erforderlich, sicherzustellen, dass die Aktivierung nicht versehentlich bei einem Herunterfallen des Geschosses initiiert wird.

Zu diesem Zweck ist ein Zeitglied vorgesehen, das zur Auswertung der Dauer des jeweils auf die Batterie einwirkenden Impulses dient, wobei das Zeitglied ein mechanisches, hydraulisches, oder pneumatisches Zeitglied sein kann. Bei einem freien Falle auf einem harten Untergrund liegt die Dauer des Impulses im Mikrosekundenbereich, während bei einem Abschuss aus einem Waffenrohr die Impulsdauer im Millisekundenbereich liegt. Bei der dort beschriebenen Aktivierungseinrichtung wird daher die bislang nur die Beschleunigungsgröße auswertende Aktivierungsvorrichtung durch eine die Impulsdauer auswertende Aktivierungsvorrichtung ersetzt. Auch diese Aktivierungseinrichtung ist konstruktiv aufwendig. Weiterer relevanter Stand der Technik ist aus EP 3 382 782 A1, US 2 918 516 A und JP S57 135074 U bekannt.

Der Erfindung liegt damit das Problem zugrunde, eine demgegenüber verbesserte, einfach aufgebaute Aktivierungseinrichtung anzugeben.

Zur Lösung dieses Problems ist bei einer Aktivierungseinrichtung der eingangs genannten Art erfindungsgemäß vorgesehen, dass die Einrichtung zum Zerbrechen ein Schnappfederelement aufweist, an dem die Ampulle freihängend angebunden ist, wobei das Schnappfederelement bei Aufbringen einer beschleunigungsbedingten Kraft von einer ersten Form in eine zweite Form unter Lösen der Anbindung der Ampulle umschnappt.

Bei der erfindungsgemäßen Aktivierungseinrichtung ist die Ampulle freihängend im Gehäuse gelagert, das heißt, dass sie nicht auf einem Lagerring oder einer Abstützung oder dergleichen aufgelagert ist. Vielmehr besteht ein hinreichender Abstand und damit ein hinreichender Bewegungsraum in Richtung eines die Ampulle zerscherbenden Elements. Darüber hinaus kommt als Auslösemechanismus ein einfaches Schnappfederelement zum Einsatz, an dem die Ampulle aufgehängt ist. Dieses Schnappfederelement kann zwischen einer ersten Form und einer zweiten Form umschnappen, wobei es die jeweilige Form permanent einnehmen kann. Der Umschnappvorgang ist durch Einwirken einer Kraft auslösbar, das heißt, wenn durch einen Abschuss über ein Waffenrohr eine hinreichende starke Beschleunigung und mithin ein hinreichend großer Impuls auf das Geschoss wirkt und demzufolge auch eine hinreichend große Kraft auf das Schnappfederelement wirkt, so ändert das Schnappfederelement seine Form von der ersten, die Ampulle arretierende Form in die zweite, die Ampulle freigebende Form. In dieser Form fällt die Ampulle im Gehäuse gegen das Aufbrechelement und wird zerbrochen.

Die erfindungsgemäße Aktivierungseinrichtung ist in ihrem Aufbau sehr einfach, was eine einfache Herstellung ermöglicht. Gleichwohl ist ein hohes Maß an Funktionssicherheit gegeben, einerseits hinsichtlich des Erreichens und Einhaltens einer entsprechenden hohen Auslöseschwelle, die auf einfache Weise durch entsprechende Auslegung des Schnappfederelements eingestellt werden kann, andererseits aber auch hinsichtlich eines sicheren Aufbrechens der Ampulle.

Für eine einfache Kopplung des Schnappfederelements mit der Ampulle sind gemäß einer vorteilhaften Weiterbildung der Erfindung an dem Schnappfederelement wenigstens zwei Haltearme vorgesehen, die in der ersten Form des Schnappfederelements mit einem an der Ampulle vorgesehenen Halteelement gekoppelt sind, welche Kopplung beim Umschnappen in die zweite Form durch eine Bewegung der Halteelemente gelöst wird. Durch diese beweglichen Haltearme wird auf einfache Weise eine mechanische Kopplung erreicht, die auch beim Umschnappen sicher gelöst wird.

Als Haltelement ist bevorzugt an der Ampulle eine Haltescheibe befestigt, an der die Arme angreifen oder die die Haltearme untergreifen, wobei die Haltescheibe bevorzugt an der Ampulle angeklebt ist. Diese Haltscheibe stellt also die mechanische Schnittstelle zu den Haltearmen dar, wobei die Haltearme bevorzugt am äußeren Rand der Haltescheibe angreifen und sich beim Umschnappen seitlich nach außen bewegen. Es ist also ein seitlicher Untergriff in der ersten Form des Schnappfederelements vorgesehen, der durch eine laterale Bewegung der Haltearme gelöst wird. Alternativ ist es denkbar, die Haltescheibe auch mit einer zentralen Bohrung zu versehen, durch die die Haltearme, die Haltescheibe am Innenumfang untergreifend, greifen, wobei sich bei dieser Ausgestaltung dann die Haltearme beim Umschnappen nach innen bewegen.

Bevorzugt sind mehr als zwei äquidistant am rundlichen Schnappfederelement verteilt angeordnete Haltearme vorgesehen, so dass ein mehrfacher mechanischer Untergriff gegeben ist, wobei sich alle Haltearme natürlich synchron beim Umschnappen aus dem Untergriff, die Haltescheibe und damit die Ampulle freigebend, lösen.

In Weiterbildung der Erfindung kann das Schnappfederelement einen umschnappenden Lagerabschnitt aufweisen, mit dem die Ampulle, insbesondere über die am Lagerabschnitt angeformten Haltearme, gekoppelt ist und dem ein beschleunigungsbedingt bewegbares Masseelement zugeordnet ist, das beschleunigungsbedingt gegeben den Lagerabschnitt bewegbar ist und das Umschnappen auslöst. Das Masseelement dient quasi als Impulsgeber zur Initiierung des Umschnappvorgangs, indem es beschleunigungsbedingt gegen den Lagerabschnitt bewegbar ist, worüber der Umschnappvorgang eingeleitet wird.

Dabei kann der Lagerabschnitt in der ersten Form zum Masseelement hin ansteigend geformt sein und in der zweiten Form vom Masseelement abfallend geformt sein. Das heißt, dass der Lagerabschnitt kegelstumpfartig, gegebenenfalls leicht gewölbt, ist, wobei die Kegelstumpfgeometrie beim Umschnappen von der einen in die andere Richtung umschnappt.

Eine zweckmäßige Weiterbildung sieht vor, dass das Masseelement über wenigstens ein über das Masseelement beschleunigungsbedingt zusammendrückbares Federelement am Lagerabschnitt abgestützt ist. Dieses wenigstens eine Federelement ist entsprechend der berechneten Auslöseschwelle vorgespannt und stützt das Masseelement am Lagerabschnitt ab. Beim Beschleunigen wird das Masseelement das Federelement zusammenpressen, bis es zur Berührung im Lagerabschnitt kommt. Steigt die Beschleunigung noch weiter an, wird ab dem berechneten Beschleunigungspunkt der Umschnappbereich, also der Lagerabschnitt geringfügig deformiert und eingedrückt, bis es zum plötzlichen Auslösen des Umschnappvorgangs kommt, wenn also der Triggerpunkt erreicht wird und sodann der Lagerabschnitt nach unten umschnappt. Hierbei bewegen sich dann die Haltearme nach außen und geben die Haltescheibe frei.

Das Federelemente ist bevorzugt ringförmig, wobei sich das Masseelement in das ringförmige Federelement erstreckt, also sich in Richtung des Lagerabschnitts erstreckt. Bevorzugt wird das ringförmige Federelement über ein oder mehrere Wellfederringe gebildet.

Gemäß einer zweckmäßigen Weiterbildung der Erfindung ist das Masseelement oder, sofern auch ein Federelement vorgesehen ist, das Masseelement und das vorgespannte Federelement am Schnappfederelement fixiert. Diese Fixierung ermöglicht es, das Federelement entsprechend vorzuspannen, also das Federelement über das Masseelement bereits etwas zusammen zu drücken.

Dabei kann die Fixierung gemäß einer besonders zweckmäßigen Weiterbildung der Erfindung das Schnappfederelement zur Halterung von Masseelement oder Masseelement und Federelement wenigstens zwei am Lagerabschnitt angeformte Fixierarme vorweisen, die sich seitlich des Masseelements oder des Masseelements und des Federelements erstrecken und das Masseelement übergreifen. Diese Fixierarme ermöglichen also eine einfache mechanische Fixierung des Masseelements und, sofern vorgesehen, auch des Federelements, auch im vorgespannten Zustand, so dass sich eine einfach aufgebaute, kompakte Einheit ergibt. Dabei sind bevorzugt auch hier mehr als zwei äquidistant am rundlichen Schnappfederelement verteilt angeordnete Fixierarme vorgesehen.

Der besondere Vorteil eines derartigen Schnappfederelements besteht darin, dass es ein einteiliges Element ist, das sämtliche relevanten Komponenten aufweist, nämlich die Haltearme, den umschnappenden Lagerabschnitt sowie die Fixierarme. Das Schnappfederelement ist bevorzugt aus Blech, vorzugsweise Federstahl, kann also als einfaches metallenes Blechbauteil in einen einfachen Stanz- und Biegeverfahren hergestellt werden. Dabei sind die Haltearme und die Fixierarme bevorzugt einander abwechselnd am Schnappfederelement vorgesehen. Beide sind am Lagerabschnitt angeformt, sie erstrecken sich jedoch zu unterschiedlichen Seiten des Lagerabschnitts.

Die Montage ist dabei denkbar einfach. Zur Montage des Federelements und des Masseelements sind diese lediglich von oben in die quasi kranzartig um den Umfang des Lagerabschnitts angeordneten Fixierarme einzudrücken, die Fixierarme schnappen in der Endstellung selbsttätig in den Übergriff über das Masseelement. Der Lagerabschnitt befindet sich in der zweiten Position, in der die Haltearme nach außen geführt sind. Zum Ansetzen an der Ampulle wird das Schnappfederelement sodann lediglich gegen die Haltescheibe gedrückt, so dass der nach unten kegelig vorspringende Lagerabschnitt gegen die Haltescheibe läuft und bei hinreichendem Druck wieder in die erste Form umschnappt. Hierbei schnappen die Haltearme wieder nach innen und untergreifen die Haltescheibe.

Zur Fixierung des bestückten Schnappfederelements im Gehäuse der Aktivierungseinrichtung ist gehäuseseitig zweckmäßiger Weise ein käfigartiger Träger vorgesehen, auf den das Schnappfederelement aufgesetzt ist, wobei es mit den sich radial gesehen weiter nach außen erstreckenden Fixierarmen, die weiter nach außen ragen als die Haltearme, am käfigartigen Träger abgestützt ist. Die Ampulle, die hängend im Gehäuse respektive im Träger aufgenommen ist, erstreckt sich in den Träger hinein. Außen um den Träger herum sind die über den Elektrolyt nach Zerbrechen der Ampulle zu aktivierenden Zellen vorgesehen.

Neben der Aktivierungseinrichtung selbst betrifft die Erfindung ferner eine aktivierbare Batterie für einen elektronischen Zündmechanismus, umfassend eine Aktivierungseinrichtung der vorstehend beschriebenen Art.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Perspektivansicht als Prinzipdarstellung einer erfindungsgemäßen Aktivierungseinrichtung im Schnitt,
- Fig. 2: eine Perspektivansicht eines Schnappfederelements,
- Fig. 3: eine Ansicht der geschnittenen Aktivierungseinrichtung im nicht ausgelösten Zustand und,
- Fig. 4: die Aktivierungseinrichtung aus Fig. 3 im ausgelösten Zustand.

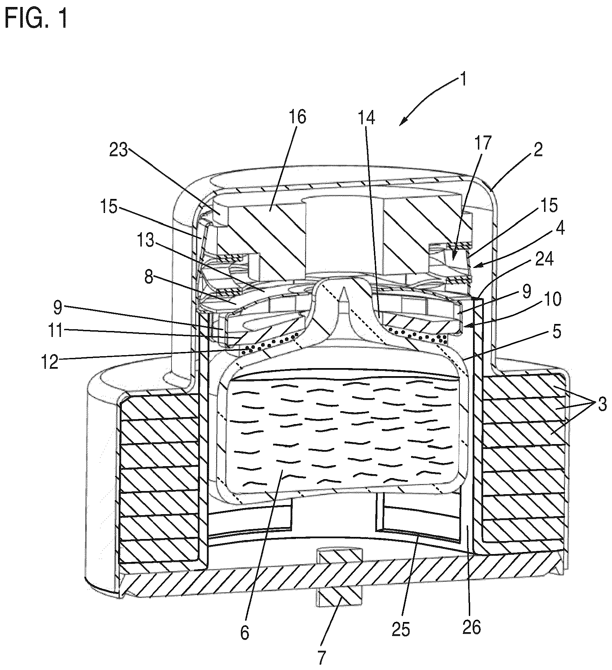

Fig. 1 zeigt eine Perspektivansicht, geschnitten, einer erfindungsgemäßen Batterie 1 umfassend ein Gehäuse 2, in dem randseitig, hier nur dem Grunde nach dargestellt, ein Zellstapel umfassend mehrere, beispielsweise sieben, Zellen 3, die über einen Elektrolyten galvanisch zu aktivieren sind, aufgenommen sind.

Zu dieser Aktivierung ist eine erfindungsgemäße Aktivierungseinrichtung 4 vorgesehen, die dazu dient, eine Ampulle 5, in der der, der Aktivierung dienende, Elektrolyt 6 aufgenommen ist, definiert freizugeben, so dass diese gegen ein Aufbrechelement 7 läuft und zerbrochen wird, so dass der Elektrolyt 6 in den Bereich der Zellen 3, diese aktivierend, fließen kann.

Die Aktivierungseinrichtung 4 umfasst hierzu ein Schnappfederelement 8, an dem die Ampulle 5 freihängend angebunden ist. Dieses Schnappfederelement 8 kann beschleunigungsbedingt von einer ersten Form, in der die Ampulle 5 aufgehängt fixiert ist, in eine zweite Form, in der die Ampulle 5 freigegeben wird und gegen das Aufbrechelement 7 schlagen kann, umschnappen.

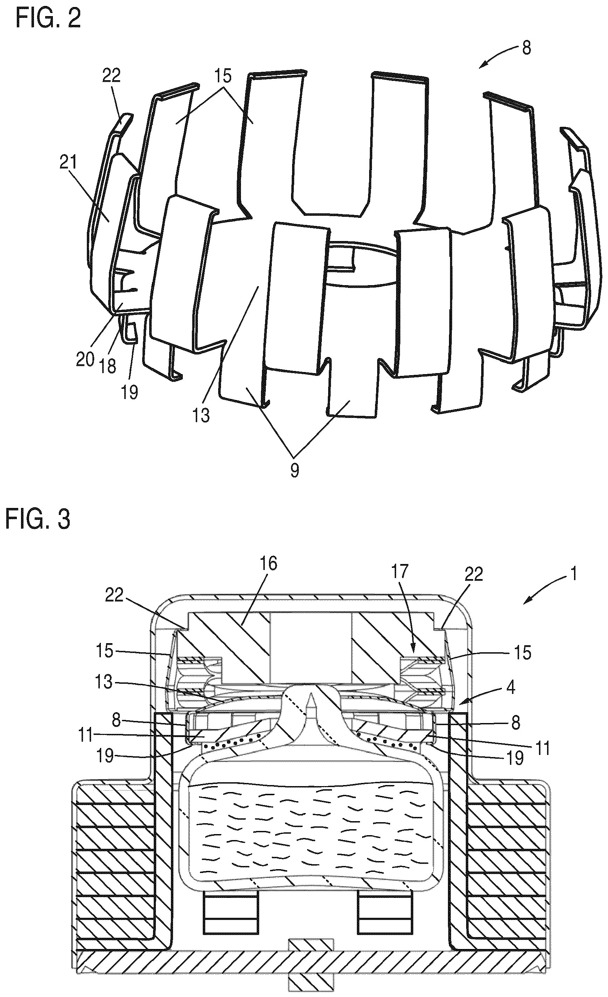

An dem Schnappfederelement 8 sind eine Mehrzahl an Haltearmen 9 vorgesehen, die in der in den Fig. 1 und 3 gezeigten, nicht ausgelösten Stellung ein Halteelement 10 hier in Form einer Haltescheibe 11, die über eine Klebeverbindung 12 mit der Ampulle 5 verbunden ist, an der äußeren Scheibenberandung untergreifen, so dass die Ampulle 5 quasi an den Haltearmen 9 aufgehängt ist.

Die Haltearme 9 sind einstückig an einem Lagerabschnitt 13 angeformt, der kegelstumpfartig und leicht gewölbt geformt ist und sich in der der nicht aktivierten Stellung quasi von der Ampulle 5 weg erstreckt. Der Lagerabschnitt 13 erwirkt das Umschnappen. Die Ampulle 5 durchgreift den Lagerabschnitt 13 in einer zentralen Bohrung 14.

An dem Lagerabschnitt 13 angeformt sind des weiteren Fixierarme 15, die sich zur gegenüberliegenden Seite wie die Haltearme 9 erstrecken. Sie dienen der Fixierung eines Masseelements 16 sowie eines Federelements 17, welches Federelement 17 an dem Lagerabschnitt 13 aufgelagert ist. Über das Federelement 17 ist das Masseelement 16 damit am Lagerabschnitt 13 abgestützt. Das Federelement 17 besteht im gezeigten Beispiel aus mehreren ringförmigen Wellfedern, die übereinander angeordnet sind.

Fig. 2 zeigt in einer vergrößerten Prinzipdarstellung das Schnappfederelement 8. Gezeigt ist der mittige, scheibenförmige Lagerabschnitt 13. Zu seiner Unterseite hin erstrecken sich die Haltearme 9, die sich nur ein kurzes Stück radial zur Seite erstrecken und sodann in einen sich quasi axial nach unten erstreckenden Abschnitt 18 übergehen, der am unteren Ende abgewinkelt ist und in einen Untergriffsabschnitt 19 übergeht. Mit diesem Untergriffsabschnitt 19 untergreift jeder Haltearm 9 die Haltescheibe 11. Ersichtlich sind hier eine Vielzahl von Haltearmen 9 äquidistant um den Umfang des Lagerabschnitts 13 verteilt angeordnet.

Die Fixierarme 15 erstrecken sich zur anderen Seite des Lagerabschnitts 13. Sie erstrecken sich mit einem Radialabschnitt 20 deutlich weiter zur Seite des Lagerabschnitts 13 als die Haltearme 9. Der Radialabschnitt 20 geht in einen Axialabschnitt 21 über, der leicht nach innen gebogen ist, und der am Ende in einen Umgriffsabschnitt 22 übergeht. Mit diesem Umgriffsabschnitt 22 umgreift jeder Fixierarm 15 das Masseelement 16, das hierzu einen umlaufenden Falz 23 aufweist, siehe Fig. 1.

Wie Fig. 1 des Weiteren zeigt, ist im Gehäuse 2 ein käfigartiger Träger 26 aufgenommen, auf dem einerseits die Zellen 3 abgestützt sind, auf dem andererseits aber auch die Aktivierungseinrichtung 4 über die relativ weit zur Seite ragenden Fixierarme 15 respektive deren Radialabschnitte 20 abgestützt ist. Diese Radialabschnitte 20 ruhen auf der oberen Stirnfläche 24 des Trägers 26, der entsprechende Durchbrechungen 25 aufweist, aus denen der Elektrolyt im Bereich der Zellen 3 strömen kann.

In Fig. 2 ist das Schnappfederelement 8 in der ersten Form gezeigt. Wenn es in die zweite Form umschnappt, würde der kegelstumpfartige Lagerabschnitt 13, der sich in dieser Form in Richtung der Fixierarme 15 erstreckt, in die entgegengesetzte Richtung, also in Richtung der Haltearme 9 erstrecken. Aufgrund des Umschnappvorgangs verändert sich die Geometrie des Lagerabschnitts 13 derart, dass die an ihm angebundenen Haltearme 9 mit ihrem unteren Ende, also den Untergriffsabschnitten 19, radial nach außen geschwenkt werden. Hierbei geben sie die Haltescheibe 11 frei, so dass die Ampulle 5 freigegeben wird. Durch das Umschnappen würde sich theoretisch auch die Geometrie der Fixierarme 15 ändern, diese würden quasi radial nach innen bewegt, was aber aufgrund der Fixierung am Masseelement 16 wenn überhaupt nur geringfügig erfolgt.

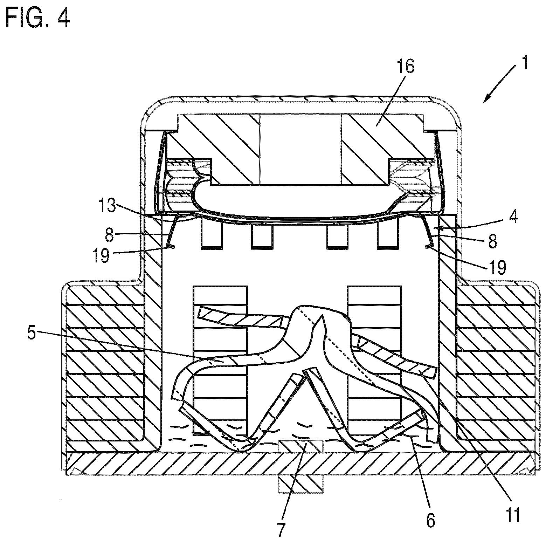

Die Fig. 3 und 4 zeigen zwei Schnittansichten der Batterie 1 bzw. der Aktivierungseinrichtung 4 aus Fig. 1. Fig. 3 zeigt dabei die Aktivierungseinrichtung 4 in der nicht aktivierten Position, also in der Arretierposition, während Fig. 4 die Aktivierungseinrichtung 4 in der Löseposition zeigt.

Wie Fig. 4 ersichtlich zeigt, untergreifen die Haltearme 9 mit den Untergriffsabschnitten 19 die Haltescheibe 11 randseitig. Der Lagerabschnitt 13 ist ersichtlich kegelstumpfartig und leicht nach oben gewölbt, also über das Masseelement 16 und das Federelement 17 bereits leicht vorgespannt. Die Fixierarme 15 übergreifen mit ihren Übergriffsabschnitten 22 das Masseelement 16, so dass dieses das Federelement 17 bestehend aus den mehreren ringförmigen Wellfedern zusammendrückt und gegen den Lagerabschnitt 13 spannt.

Wird nun ein Geschoss, in das die Batterie 1 eingebaut ist, verschossen, so wird das Geschoss und damit auch die Batterie 1 extrem stark beschleunigt. Bei Erreichen einer hinreichenden Beschleunigungsschwelle, die je nach Auslegung des Umschnappverhaltens des Schnappfederelements 8 mehr oder weniger hoch ausgelegt werden kann, kommt es dazu, dass die Kraft respektive der Druck, den das Masseelement 16 auf den Lagerabschnitt 13 ausübt, so groß wird, dass dieser nach unten gedrückt wird. Mit Erreichen eines entsprechenden Triggerpunktes schnappt der Lagerabschnitt 13 um, ausgehend von der in Fig. 3 gezeigten ersten Form in die in Fig. 4 gezeigte zweite Form. In dieser wölbt sich der Lagerabschnitt 13 nach unten. Gleichzeitig werden hierbei die Haltarme 9 radial zur Seite hin ausgebogen. Hierbei geraten die Untergriffsabschnitte 10 aus ihrem Untergriff unter der Haltescheibe 11, so dass die Haltescheibe 11 freigegeben wird und die Ampulle 5 nach unten fällt und auf das Aufbrechelement 7 aufgeschlägt, wodurch sie zerbricht, wie in Fig. 4 gezeigt ist. Der Elektrolyt 6 strömt dabei aus und gelangt in den Bereich der Zellen 3, um diese zu aktivieren.

### Bezugszeichenliste

- 1: Aktivierungseinrichtung
- 2: Gehäuse
- 3: Zelle
- 4: Aktivierungseinrichtung
- 5: Ampulle
- 6: Elektrolyt
- 7: Aufbrechelement
- 8: Schnappfederelement
- 9: Haltearm
- 10: Halteelement
- 11: Haltescheibe
- 12: Klebeverbindung
- 13: Lagerabschnitt
- 14: Bohrung
- 15: Fixierarm
- 16: Masseelement
- 17: Federelement
- 18: Abschnitt
- 19: Untergriffsabschnitt
- 20: Radialabschnitt
- 21: Axialabschnitt
- 22: Umgriffsabschnitt/Übergriffsabschnitt
- 23: Falz
- 24: Stirnfläche
- 25: Durchbrechung
- 26: Träger

## Patentansprüche

1. Aktivierungseinrichtung für eine Batterie (1) für einen elektronischen Zündmechanismus, umfassend eine mit einem Elektrolyten (6) gefüllte Ampulle (5) sowie eine Einrichtung zum Zerbrechen der Ampulle (5), wobei die Einrichtung zum Zerbrechen ein Schnappfederelement (8) aufweist,
**dadurch gekennzeichnet,**
**dass** die Ampulle (5) an dem Schnappfederelement (8) hängend angebunden ist, wobei das Schnappfederelement (8) bei Aufbringen einer beschleunigungsbedingten Kraft von einer ersten Form in eine zweite Form unter Lösen der Anbindung der Ampulle (5) umschnappt.

2. Aktivierungseinrichtung nach Anspruch 1,
**dadurch gekennzeichnet,**
**dass** an dem Schnappfederelement (8) wenigstens zwei Haltearme (9) vorgesehen sind, die in der ersten Form des Schnappfederelements (8) mit einem an der Ampulle (5) vorgesehenen Halteelement (10) gekoppelt sind, welche Kopplung beim Umschnappen in die zweite Form durch eine Bewegung der Haltearme (9) gelöst wird.

3. Aktivierungseinrichtung nach Anspruch 2,
**dadurch gekennzeichnet,**
**dass** an der Ampulle (5) als Halteelement (10) eine Haltescheibe (11) befestigt ist, an der die Haltearme (9) angreifen oder die die Haltearme (9) untergreifen.

4. Aktivierungseinrichtung nach Anspruch 3,
**dadurch gekennzeichnet,**
**dass** die Haltescheibe (11) an der Ampulle (5) angeklebt ist.

5. Aktivierungseinrichtung nach Anspruch 2 oder 3,
**dadurch gekennzeichnet,**
**dass** die Haltearme (9) am äußeren Rand der Haltescheibe (11) angreifen und sich beim Umschnappen seitlich nach außen bewegen.

6. Aktivierungseinrichtung nach einem der Ansprüche 2 bis 5,
**dadurch gekennzeichnet,**
**dass** mehr als zwei äquidistant am rundlichen Schnappfederelement (8) verteilt angeordnete Haltearme (9) vorgesehen sind.

7. Aktivierungseinrichtung nach einem der vorangehenden Ansprüche,
**dadurch gekennzeichnet,**
**dass** das Schnappfederelement (8) einen umschnappenden Lagerabschnitt(13) aufweist, mit dem die Ampulle (5), insbesondere über die am Lagerabschnitt (13) angeformten Haltearme (9), gekoppelt ist und dem ein beschleunigungsbedingt bewegbares Masseelement (16) zugeordnet ist, das beschleunigungsbedingt gegen den Lagerabschnitt (13) bewegbar ist und das Umschnappen auslöst.

8. Aktivierungseinrichtung nach Anspruch 7,
**dadurch gekennzeichnet,**
**dass** der Lagerabschnitt (13) in der ersten Form zum Masseelement (16) hin ansteigend geformt ist und in der zweiten Form vom Masseelement (16) abfallend geformt ist.

9. Aktivierungseinrichtung nach Anspruch 7 oder 8,
**dadurch gekennzeichnet,**
**dass** das Masseelement (16) über wenigstens ein über das Masseelement (16) beschleunigungsbedingt zusammendrückbares Federelement (17) am Lagerabschnitt (13) abgestützt ist.

10. Aktivierungseinrichtung nach Anspruch 9,
**dadurch gekennzeichnet,**
**dass** das Federelement (17) ringförmig ist, wobei sich das Masseelement (16) in das ringförmige Federelement (17) erstreckt.

11. Aktivierungseinrichtung nach Anspruch 10,
**dadurch gekennzeichnet,**
**dass** das ringförmige Federelement (17) über einen oder mehrere Wellfederringe gebildet ist.

12. Aktivierungseinrichtung nach einem der Ansprüche 7 bis 11,
**dadurch gekennzeichnet,**
**dass** das Masseelement (16) oder das Masseelement (16) und das vorgespannte Federelement (17) am Schnappfederelement (8) fixiert sind.

13. Aktivierungseinrichtung nach Anspruch 12,
**dadurch gekennzeichnet,**
**dass** das Schnappfederelement (8) wenigstens zwei am Lagerabschnitt (13) angeformte Fixierarme (15) aufweist, die sich seitlich des Masseelements (16) oder des Masseelements (16) und des Federelements (17) erstrecken und das Masseelement (16) übergreifen.

14. Aktivierungseinrichtung nach Anspruch 13,
**dadurch gekennzeichnet,**
**dass** mehr als zwei äquidistant am rundlichen Schnappfederelement (8) verteilt angeordnete Fixierarme (15) vorgesehen sind.

15. Aktivierungseinrichtung nach Anspruch 2 und Anspruch 13 oder 14,
**dadurch gekennzeichnet,**
**dass** die Haltearme (9) und die Fixierarme (15) einander abwechselnd am Schnappfederelement (8) vorgesehen sind.

16. Aktivierungseinrichtung nach einem der vorangehenden Ansprüche,
**dadurch gekennzeichnet,**
**dass** sich das Schnappfederelement (8) auf einem käfigartigen Träger (26), in den hinein sich die Ampulle (5) erstreckt, abgestützt ist.

17. Aktivierbare Batterie für einen elektronischen Zündmechanismus, umfassend eine Aktivierungseinrichtung (4) nach einem der vorangehenden Ansprüche.

## Claims

1. Activation device for a battery (1) for an electronic ignition mechanism, comprising an ampoule (5) filled with an electrolyte (6) and a device for breaking the ampoule (5), wherein the breaking device has a snap-action spring element (8),
**characterized**
**in that** the ampoule (5) is attached in a suspended manner to the snap-action spring element (8), wherein the snap-action spring element (8) snaps over from a first shape into a second shape when a force due to acceleration is applied, thereby releasing the attachment of the ampoule (5).

2. Activation device according to Claim 1,
**characterized**
**in that** at least two holding arms (9) are provided on the snap-action spring element (8) which are coupled in the first shape of the snap-action spring element (8) with a holding element (10) provided on the ampoule (5), which coupling is released during the snap-over process into the second shape by a movement of the holding arms (9).

3. Activation device according to Claim 2,
**characterized**
**in that** a holding plate (11) on which the holding arms (9) engage or beneath which the holding arms (9) engage is fastened to the ampoule (5) as the holding element (10).

4. Activation device according to Claim 3*,*
**characterized**
**in that** the holding plate (11) is adhesively bonded to the ampoule (5).

5. Activation device according to Claim 2 or 3*,*
**characterized**
**in that** the holding arms (9) engage on the outer edge of the holding plate (11) and move laterally outwards during the snap-over process.

6. Activation device according to any of Claims 2 to 5,
**characterized**
**in that** more than two holding arms (9) arranged distributed equidistantly on the round snap-action spring element (8) are provided.

7. Activation device according to any of the preceding claims,
**characterized**
**in that** the snap-action spring element (8) has a snap-over bearing portion (13) to which the ampoule (5) is coupled, in particular via the holding arms (9) integrally formed on the bearing portion (13), and to which a mass element (16) movable due to acceleration is assigned, the mass element being movable against the bearing portion (13) due to acceleration and triggering the snap-over process.

8. Activation device according to Claim 7,
**characterized**
**in that** the bearing portion (13) in the first shape is formed rising to the mass element (16) and in the second shape is formed falling from the mass element (16).

9. Activation device according to Claim 7 or 8,
**characterized**
**in that** the mass element (16) is supported on the bearing portion (13) via at least one spring element (17) that can be compressed via the mass element (16) due to acceleration.

10. Activation device according to Claim 9,
**characterized**
**in that** the spring element (17) is annular, wherein the mass element (16) extends into the annular spring element (17).

11. Activation device according to Claim 10,
**characterized**
**in that** the annular spring element (17) is formed by one or more crinkle spring washers.

12. Activation device according to any of Claims 7 to 11,
**characterized**
**in that** the mass element (16) or the mass element (16) and the preloaded spring element (17) are fixed to the snap-action spring element (8).

13. Activation device according to Claim 12,
**characterized**
**in that** the snap-action spring element (8) has at least two fixing arms (15) which are integrally formed on the bearing portion (13) and extend to the side of the mass element (16) or the mass element (16) and the spring element (17) and engage over the mass element (16).

14. Activation device according to Claim 13,
**characterized**
**in that** more than two fixing arms (15) arranged distributed equidistantly on the round snap-action spring element (8) are provided.

15. Activation device according to Claim 2 and Claim 13 or 14,
**characterized**
**in that** the holding arms (9) and the fixing arms (15) are provided alternately on the snap-action spring element (8).

16. Activation device according to any of the preceding claims,
**characterized**
**in that** the snap-action spring element (8) is supported on a cage-like carrier (26) into which the ampoule (5) extends.

17. Activatable battery for an electronic ignition mechanism, comprising an activation device (4) according to any of the preceding claims.

## Revendications

1. Dispositif d'activation pour une batterie (1) pour un mécanisme d'allumage électronique, comprenant une ampoule (5) remplie d'un électrolyte (6) ainsi qu'un dispositif de rupture de l'ampoule (5), le dispositif de rupture présentant un élément à ressort à action rapide (8),
**caractérisé**
**en ce que** l'ampoule (5) est liée de manière suspendue à l'élément à ressort à action rapide (8), l'élément à ressort à action rapide (8) basculant d'une première forme vers une seconde forme, sous l'application d'une force due à l'accélération, en libérant ainsi la liaison de l'ampoule (5).

2. Dispositif d'activation selon la revendication 1,
**caractérisé**
**en ce qu'**il est prévu sur l'élément à ressort à action rapide (8) au moins deux bras de maintien (9) qui sont couplés dans la première forme de l'élément à ressort à action rapide (8) avec un élément de maintien (10) prévu sur l'ampoule (5), lequel couplage est libéré lors du processus de basculement vers la seconde forme par un mouvement des bras de maintien (9).

3. Dispositif d'activation selon la revendication 2,
**caractérisé**
**en ce qu'**une plaque de maintien (11) sur laquelle les bras de maintien (9) s'engagent ou sous laquelle les bras de maintien (9) s'engagent est fixée à l'ampoule (5) en tant qu'élément de maintien (10).

4. Dispositif d'activation selon la revendication 3,
**caractérisé**
**en ce que** la plaque de maintien (11) est collée à l'ampoule (5).

5. Dispositif d'activation selon la revendication 2 ou 3,
**caractérisé**
**en ce que** les bras de maintien (9) s'engagent sur le bord extérieur de la plaque de maintien (11) et se déplacent latéralement vers l'extérieur lors du processus de basculement.

6. Dispositif d'activation selon l'une quelconque des revendications 2 à 5,
**caractérisé**
**en ce qu'**il est prévu plus de deux bras de maintien (9), disposés de manière répartie sur l'élément à ressort à action rapide (8) rond.

7. Dispositif d'activation selon l'une quelconque des revendications précédentes,
**caractérisé**
**en ce que** l'élément à ressort à action rapide (8) présente une partie d'appui de basculement (13) à laquelle l'ampoule (5) est couplée, en particulier par l'intermédiaire des bras de maintien (9) formés sur la partie d'appui (13), et à laquelle un élément de masse (16) mobile sous l'effet de l'accélération est associé, l'élément de masse étant mobile contre la partie d'appui (13) sous l'effet de l'accélération et déclenchant le processus de basculement.

8. Dispositif d'activation selon la revendication **7,**
**caractérisé**
**en ce que** la partie d'appui (13) est formée montante vers l'élément de masse (16) dans la première forme et est formée descendante à partir de l'élément de masse (16) dans la seconde forme.

9. Dispositif d'activation selon la revendication 7 ou 8,
**caractérisé**
**en ce que** l'élément de masse (16) est supporté sur la partie d'appui (13) par l'intermédiaire d'au moins un élément à ressort (17) qui peut être comprimé par l'intermédiaire de l'élément de masse (16) sous l'effet de l'accélération.

10. Dispositif d'activation selon la revendication 9,
**caractérisé**
**en ce que** l'élément à ressort (17) est annulaire, l'élément de masse (16) s'étendant dans l'élément à ressort (17) annulaire.

11. Dispositif d'activation selon la revendication 10,
**caractérisé**
**en ce que** l'élément à ressort (17) annulaire est formé par une ou plusieurs rondelles élastiques ondulées.

12. Dispositif d'activation selon l'une quelconque des revendications 7 à 11,
**caractérisé**
**en ce que** l'élément de masse (16) ou l'élément de masse (16) et l'élément à ressort (17) précontraint sont fixés à l'élément à ressort à action rapide (8).

13. Dispositif d'activation selon la revendication 12,
**caractérisé**
**en ce que** l'élément à ressort à action rapide (8) présente au moins deux bras de fixation (15) formés sur la partie d'appui (13) et qui s'étendent sur le côté de l'élément de masse (16) ou de l'élément de masse (16) et de l'élément à ressort (17) et s'engagent sur l'élément de masse (16) .

14. Dispositif d'activation selon la revendication 13,
**caractérisé**
**en ce qu'**il est prévu plus de deux bras de fixation (15) disposés de manière répartie sur l'élément à ressort à action rapide (8) rond.

15. Dispositif d'activation selon la revendication 2 et la revendication 13 ou 14,
**caractérisé**
**en ce que** les bras de maintien (9) et les bras de fixation (15) sont prévus en alternance sur l'élément à ressort à action rapide (8).

16. Dispositif d'activation selon l'une quelconque des revendications précédentes,
**caractérisé**
**en ce que** l'élément à ressort à action rapide (8) est supporté sur un support de type cage (26) dans lequel s'étend l'ampoule (5).

17. Batterie activable pour un mécanisme d'allumage électronique, comprenant un dispositif d'activation (4) selon l'une quelconque des revendications précédentes.
